# EUROPEAN PATENT APPLICATION

(11) **EP 4 813 833 A1**
(43) Date of publication of application: **30.09.2026**
(21) Application number: 25185188.7
(22) Date of filing: 25.06.2025
(51) Int. Cl.: B64C 3/40, B64C 13/30, B64U 30/12, B64U 20/50, B64U 70/50

(54) **SYSTEM FOR CONTROLLING WING SWEEP ANGLE AND UNMANNED AERIAL VEHICLE INCLUDING THE SAME**

(30) Priority: 25.03.2025 KR 20250038312
(71) Applicant: Hanwha Aerospace Co., Ltd., Gyeongsangnam-do 51542 (KR)
(72) Inventor: Lee, Hyun Chul, 51542 Changwon-si, Gyeongsangnam-do (KR)
(74) Representative: Gulde & Partner

(57) **Abstract**

Provided is a system for controlling a wing sweep angle, the system including main wings rotatably mounted on a fuselage of the unmanned aerial vehicle and a control unit configured to control a sweep angle of the main wings, wherein the control unit is further configured to deploy or retract the main wings, and fix the main wings at at least two sweep angles.

## Description

### BACKGROUND

### 1. Field

The disclosure relates to a system for controlling a wing sweep angle and an unmanned aerial vehicle including the system.

### 2. Description of the Related Art

Recently, there has been a rapid development of unmanned aerial vehicles. In particular, on the battle field, unmanned aerial vehicles can perform reconnaissance functions and are widely used for self-detonation missions.

On the other hand, aircraft have different flight characteristics depending on a sweep angle of wings. That is, even for the same wing, an equivalent wingspan and the other related characteristics change according to a value of the sweep angle, and thus, the flight characteristics also change.

Therefore, an unmanned aerial vehicle may have a concept in which the flight characteristics are changed by adjusting the sweep angle of the wings depending on the nature of a mission, which allows for more efficient execution of the mission.

Japanese Patent Publication No. 6872545 discloses a technology in which an actuator and a sweep gearbox are provided, allowing wings to be deployed at a sweep deployment angle.

### SUMMARY

Provided is a system for controlling a wing sweep angle, the system having a simple structure to retract and fix wings after the wings have been deployed, and an unmanned aerial vehicle including the system.

Additional aspects will be set forth in part in the description which follows and, in part, will be apparent from the description, or may be learned by practice of the presented embodiments of the disclosure.

According to an aspect of the disclosure, a system for controlling a wing sweep angle may include main wings rotatably mounted on a fuselage, and a control unit configured to control a sweep angle of the main wings, wherein the control unit is further configured to deploy or retract the main wings, and fix the main wings at at least two sweep angles.

According to an embodiment, the main wings may be mounted on the fuselage by hinge structures.

According to an embodiment, the control unit may include a link unit connected to the main wings, a first rod unit connected to the link unit, a first actuator in which the first rod unit is elastically installed, a first elastic locking unit installed in the first actuator and configured to restrict a movement of the first rod unit, a second rod unit connected to the first actuator and moving together with the first actuator, a second actuator, in which the second rod unit is installed, and which is fixedly installed on the fuselage, a second elastic locking unit configured to restrict a movement of the second rod unit, and a trigger actuator including a trigger unit configured to release the restriction of the second rod unit.

According to an embodiment, the first rod unit elastically may be installed in the first actuator by a first coil spring.

According to an embodiment, a direction in which the first elastic locking unit restricts the movement of the first rod unit may be opposite to a direction in which the second elastic locking unit restricts the movement of the second rod unit.

According to an embodiment, the second rod unit may be elastically installed in the second actuator.

According to an embodiment, the second rod unit may be elastically installed in the second actuator by a second coil spring.

According to an embodiment, a direction of an elastic force acting on the second rod unit may be opposite to a direction of an elastic force acting on the first rod unit.

According to an embodiment, the first elastic locking unit may include a first locking unit with at least an inclined surface.

According to an embodiment, the second elastic locking unit may include a second locking unit with at least an inclined surface.

According to an embodiment, when the trigger actuator may be operated and the trigger unit is configured to release the restriction of the second rod unit, the second rod unit moves forward and is caught by the second elastic locking unit, thereby restricting movement of the second rod unit.

According to another aspect of the disclosure, an unmanned aerial vehicle includes a fuselage, main wings rotatably mounted on the fuselage, and a control unit configured to control a sweep angle of the main wings, wherein the control unit is further configured to deploy or retract the main wings, and fix the main wings at at least two sweep angles.

According to an embodiment, the control unit may include a link unit connected to the main wings, a first rod unit connected to the link unit, a first actuator in which the first rod unit is elastically installed, a first elastic locking unit installed in the first actuator and configured to restrict a movement of the first rod unit, a second rod unit connected to the first actuator and moving together with the first actuator, a second actuator, in which the second rod unit is installed, and which is fixedly installed on the fuselage, a second elastic locking unit configured to restrict a movement of the second rod unit, and a trigger actuator including a trigger unit configured to release the restriction of the second rod unit.

According to an embodiment, the first rod unit elastically may be installed in the first actuator by a first coil spring.

According to an embodiment, a direction in which the first elastic locking unit restricts the movement of the first rod unit may be opposite to a direction in which the second elastic locking unit restricts the movement of the second rod unit.

According to an embodiment, the second rod unit may be elastically installed in the second actuator.

According to an embodiment, the second rod unit may be elastically installed in the second actuator by a second coil spring.

According to an embodiment, a direction of an elastic force acting on the second rod unit may be opposite to a direction of an elastic force acting on the first rod unit.

According to an embodiment, the unmanned aerial vehicle may further include a trigger control unit configured to control the trigger actuator, and a thrust-generating unit configured to move the fuselage.

According to an embodiment, the trigger control unit may be further configured to operate the trigger actuator when the main wings need to be retracted.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic perspective view illustrating a state of main wings of an unmanned aerial vehicle in a first mode according to a first embodiment;
FIG. 2 is a schematic perspective view illustrating a transition from the first mode to a second mode of the main wings of the unmanned aerial vehicle according to the first embodiment when a self-detonation attack is attempted;
FIG. 3 is a schematic perspective view illustrating a state of the main wings of the unmanned aerial vehicle in the second mode according to the first embodiment;
FIG. 4 is a schematic perspective view illustrating components of a system for controlling a wing sweep angle, when the state of the main wings of the unmanned aerial vehicle is in the first mode, according to the first embodiment;
FIG. 5 is a schematic side-view diagram illustrating a state of a first rod unit, a first actuator, a first coil spring, and a first elastic locking unit when the unmanned aerial vehicle according to the first embodiment is stored in a canister;
FIG. 6 is a schematic side-view diagram illustrating a state of the first rod unit, the first actuator, the first coil spring, and the first elastic locking unit, when the unmanned aerial vehicle according to the first embodiment is launched from the canister and the state of the main wings is in the first mode;
FIG. 7 is a schematic side-view diagram illustrating a state of a second rod unit, a second actuator, a second coil spring, a trigger actuator, and a second elastic locking unit when the unmanned aerial vehicle according to the first embodiment is stored in the canister or the state of the main wings is in the first mode;
FIG. 8 is a schematic side-view diagram illustrating a state of the second rod unit, the second actuator, the second coil spring, the trigger actuator, and the second elastic locking unit, when the state of the main wings of the unmanned aerial vehicle according to the first embodiment is in the second mode;
FIG. 9 is a schematic top-view diagram illustrating a state of a major portion of the system for controlling the wing sweep angle when the unmanned aerial vehicle according to the first embodiment is stored in the canister;
FIG. 10 is a schematic top-view diagram illustrating a state of the major portion of the system for controlling the wing sweep angle, when the unmanned aerial vehicle according to the first embodiment is launched from the canister and the state of the main wings is in the first mode;
FIG. 11 is a schematic diagram illustrating a state of the major portion of the system for controlling the wing sweep angle when the state of the main wings of the unmanned aerial vehicle according to the first embodiment is in the second mode;
FIG. 12 is a schematic diagram illustrating components of the system for controlling the wing sweep angle when a state of the main wings of an unmanned aerial vehicle according to a second embodiment is in the first mode;
FIG. 13 is a schematic side-view diagram illustrating a state of a second rod unit, a second actuator, a trigger actuator, and a second elastic locking unit when the unmanned aerial vehicle according to the second embodiment is stored in a canister or a state of the main wings of the unmanned aerial vehicle is in the first mode; and
FIG. 14 is a schematic side-view diagram illustrating a state of the second rod, the second actuator, the trigger actuator, and the second elastic locking unit, when a state of the main wings of the unmanned aerial vehicle according to the second embodiment is in the second mode.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

The disclosure will now be described in detail with reference to the accompanying drawings, illustrating preferred embodiments. Furthermore, in this specification and the accompanying drawings, components having substantially the same configuration are designated by the same reference numerals to avoid redundant explanations, and portions of the drawings may be exaggerated in terms of size or length ratios for clarity.

The disclosure will become clearer by referring to the embodiments described in detail below, with reference to the accompanying drawings. However, the disclosure is not limited to the embodiments disclosed below, and may be implemented in various other forms. These embodiments are provided merely to fully disclose the disclosure and to enable a person skilled in the relevant art to fully understand the scope of the disclosure. The disclosure is defined only by the claims.

Meanwhile, the terms used in this specification are for the purpose of describing the embodiments and are not intended to limit the disclosure. In this specification, the singular form includes the plural form unless otherwise stated in the context. The terms "comprises" and/or "comprising" as used in the specification do not exclude the presence or addition of one or more other components, steps, actions, and/or elements. The terms "first," "second," and so on, may be used to describe various components, but the components should not be limited by these terms. The terms are used solely for the purpose of distinguishing one component from another.

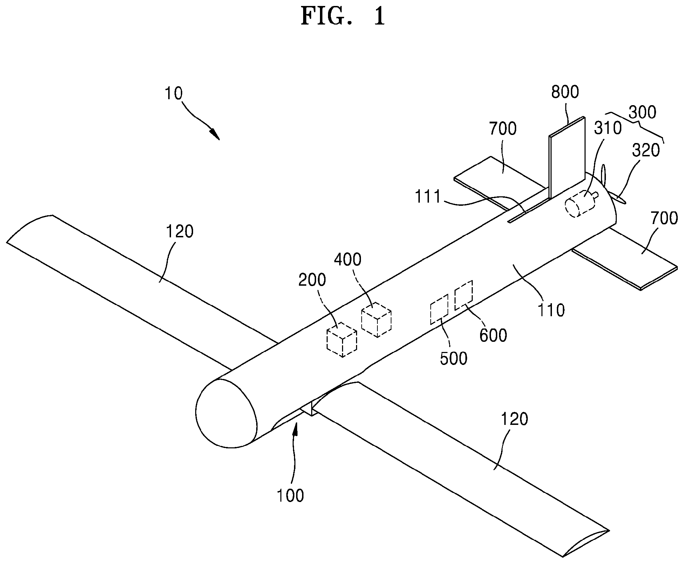

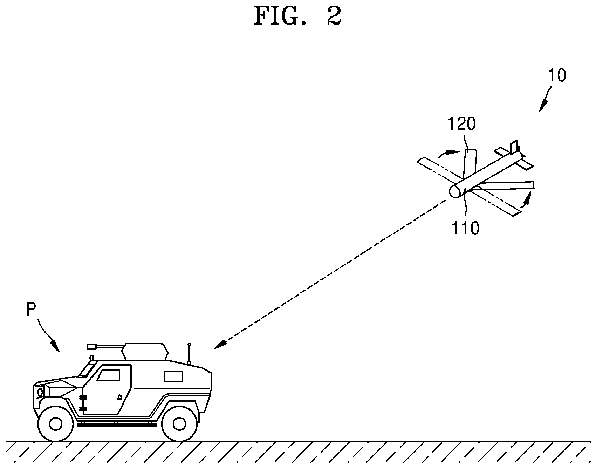

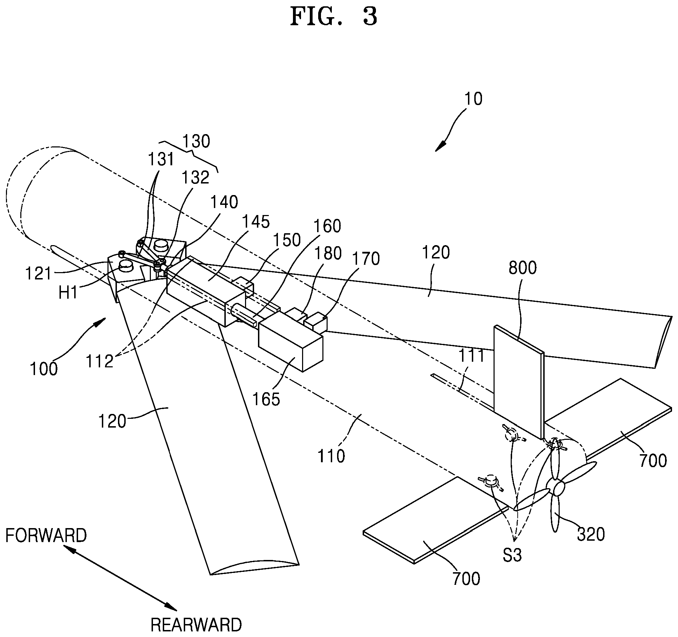

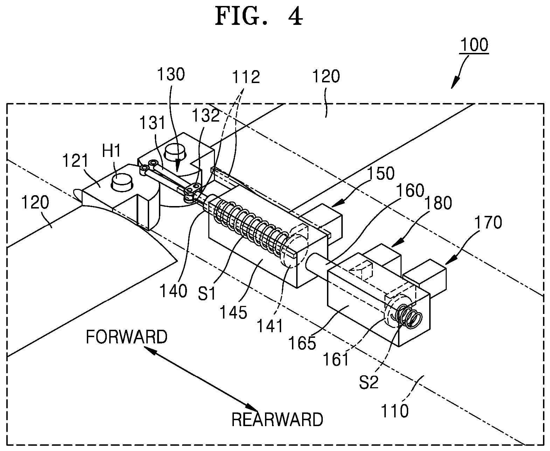

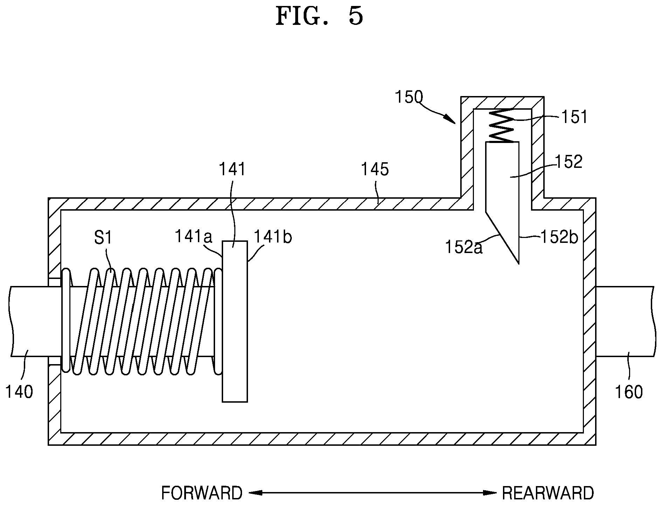

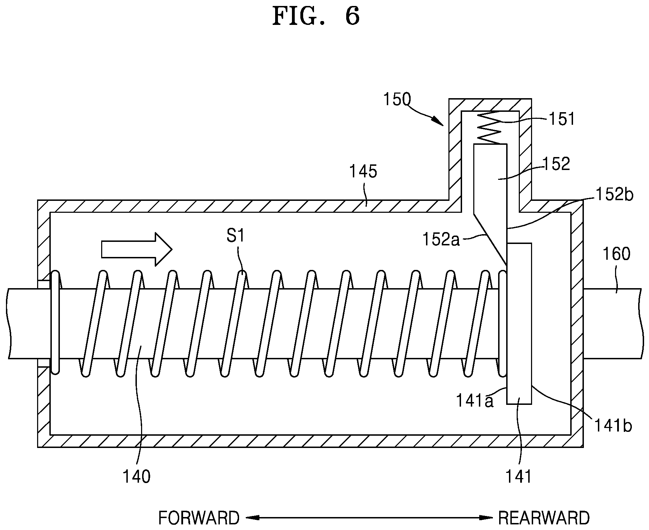

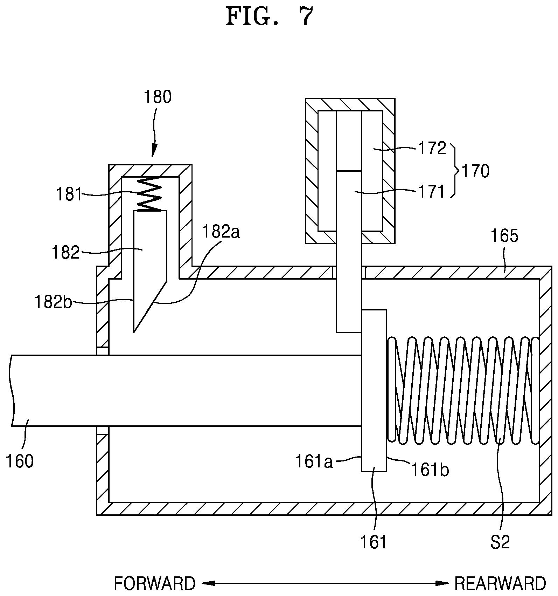

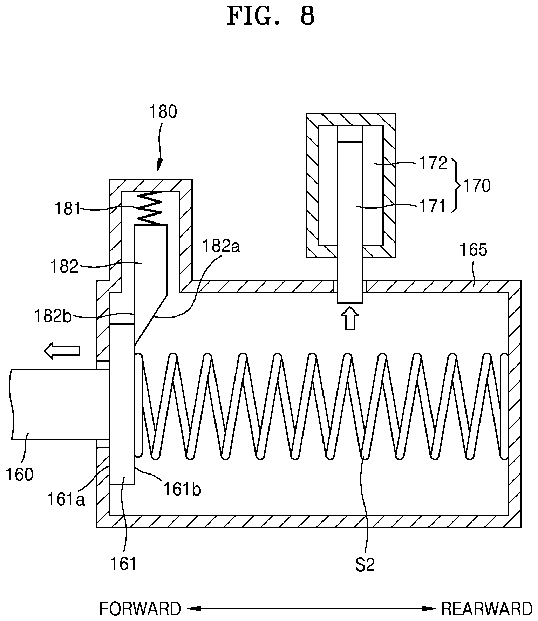

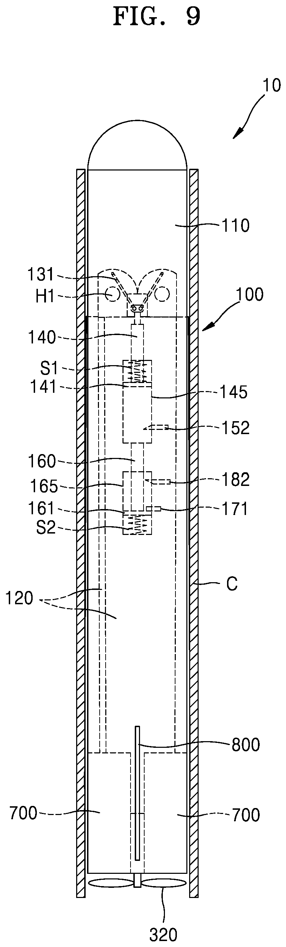

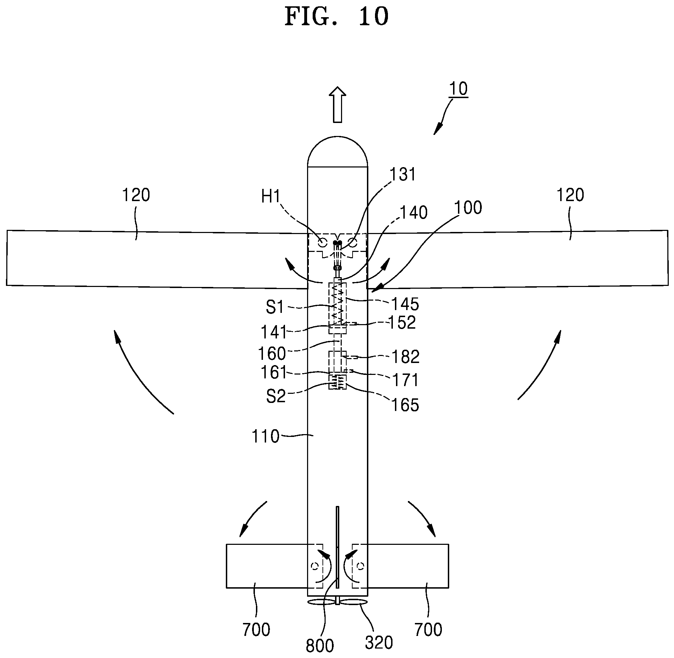

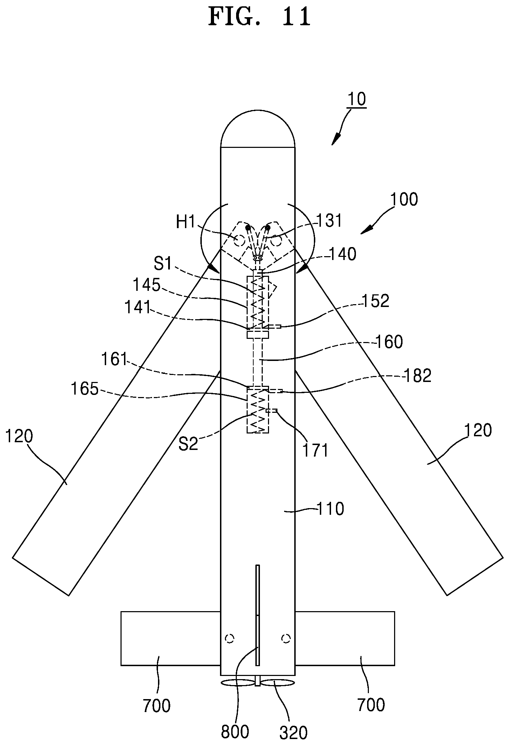

FIG. 1 is a schematic perspective view illustrating a state of the main wings of an unmanned aerial vehicle in a first mode according to a first embodiment, FIG. 2 is a schematic perspective view illustrating a transition from the first mode to a second mode of the main wings of the unmanned aerial vehicle according to the first embodiment when a self-detonation attack is attempted, and FIG. 3 is a schematic perspective view illustrating a state of the main wings of the unmanned aerial vehicle in the second mode according to the first embodiment. Additionally, FIG. 4 is a schematic perspective view illustrating components of a system for controlling a wing sweep angle when the state of the main wings of the unmanned aerial vehicle is in the first mode, according to the first embodiment, FIG. 5 is a schematic side-view diagram illustrating a state of a first rod unit, a first actuator, a first coil spring, and a first elastic locking unit when the unmanned aerial vehicle according to the first embodiment is stored in a canister, and FIG. 6 is a schematic side-view diagram illustrating a state of the first rod unit, the first actuator, the first coil spring, and the first elastic locking unit when the unmanned aerial vehicle according to the first embodiment is launched from the canister and the state of the main wings is in the first mode. Furthermore, FIG. 7 is a schematic diagram side-view illustrating a state of the second rod unit, the second actuator, the second coil spring, the trigger actuator, and the second elastic locking unit when the unmanned aerial vehicle according to the first embodiment is stored in the canister or the state of the main wings is in the first mode, and FIG. 8 is a schematic side-view diagram illustrating a state of the second rod unit, the second actuator, the second coil spring, the trigger actuator, and the second elastic locking unit, when the state of the main wings of an unmanned aerial vehicle according to the first embodiment is in the second mode. Moreover, FIG. 9 is a schematic top-view diagram illustrating a state of a major portion of the system for controlling the wing sweep angle when the unmanned aerial vehicle according to the first embodiment is stored in the canister, FIG. 10 is a schematic top-view diagram illustrating a state of the major portion of the system for controlling the wing sweep angle when the unmanned aerial vehicle according to the first embodiment is launched from the canister and the state of the main wings is in the first mode, and FIG. 11 is a schematic diagram illustrating a state of a major portion of the system for controlling the wing sweep angle when the state of the main wings of the unmanned aerial vehicle according to the first embodiment is in the second mode.

As illustrated in FIG. 1, an unmanned aerial vehicle 10 according to the first embodiment includes a system 100 for controlling the wing sweep angle, a trigger control unit 200, a thrust-generating unit 300, a main control unit 400, a communication unit 500, a camera unit 600, horizontal tail wings 700, and a vertical tail wing 800.

The system 100 controls a sweep angle of main wings 120 and includes a fuselage 110, a main wings 120, a link unit 130, a first rod unit 140, a first actuator 145, a first elastic locking unit 150, a second rod unit 160, a second actuator 165, a trigger actuator 170, and a second elastic locking unit 180. Here, the link unit 130, the first rod unit 140, the first actuator 145, the first elastic locking unit 150, the second rod unit 160, the second actuator 165, the trigger actuator 170, and the second elastic locking unit 180 form a control unit for controlling the angle of the main wings 120.

The unmanned aerial vehicle 10 according to the first embodiment is stored in a cylindrical canister C before launch, and is launched from the canister C when required. When stored in the canister C, the main wings 120, the horizontal tail wings 700, and the vertical tail wing 800 are arranged to overlap or be accommodated in the fuselage 110, thus enabling storage in the canister C.

The unmanned aerial vehicle 10 according to the present embodiment has a structure launched from a canister C, but the disclosure is not limited thereto. That is, the unmanned aerial vehicle 10 according to the disclosure may be configured to be launched from a launcher having a shape different from a cylindrical canister.

The fuselage 110 forms a body portion of the unmanned aerial vehicle 10 and has a size that allows storage in the canister C.

The trigger control unit 200, the main control unit 400, the communication unit 500, and the camera unit 600 of the unmanned aerial vehicle 10 are installed in the fuselage 110.

In addition, the fuselage 110 may include a storage portion 111 configured to accommodate the vertical tail wing 800 (see FIG. 3), and a guide unit 112 configured to guide a movement of the first actuator 145 may also be installed therein (see FIG. 4).

The guide unit 112 may have any configuration for guiding a movement of the first actuator 145, and no particular limitation is imposed on its detailed structure. For example, the guide unit 112 may include a rail structure.

Meanwhile, the main wings 120 may be provided as a pair and may be rotatably mounted on the fuselage 110. That is, wing connection units 121 of the main wings 120 may be installed on the fuselage 110 by hinge structures including first hinge pins H1, so that the main wings 120 may be configured to rotate forward or backward with respect to the fuselage 110.

The link unit 130 may be configured to transmit power by being connected to the main wings 120. The link unit 130 includes a pair of links 131 and a link connection portion 132. One end of each link 131 may be hingedly connected to a respective one of the main wings 120, and the other end may be hingedly connected to the link connection portion 132.

The link connection portion 132 may be connected to the pair of links 131 and also to the first rod unit 140. Accordingly, the link connection portion 132 moves in conjunction with a movement of the first rod unit 140.

The first rod unit 140 may be connected to the link unit 130 and may be elastically installed in the first actuator 145.

One end of the first rod unit 140 may be connected to the link connection portion 132, and a first protrusion 141 configured to be caught by the first elastic locking unit 150 may be formed at the other end thereof.

Because the first rod unit 140 is elastically installed in the first actuator 145, when the unmanned aerial vehicle 10 is launched from the canister C and an external constraint on the main wings 120 is released, an elastic force acts on the first rod unit 140, and the link unit 130 rotates the main wings 120, so that the main wings 120 reaches a first mode state.

Advantageously, a first coil spring S1 may be provided to elastically install the first rod unit 140 in a reliable manner. That is, when the unmanned aerial vehicle 10 is stored in the canister C, the first coil spring S1 may be in a compressed state, as shown in FIG. 5 in a side-view. However, when the unmanned aerial vehicle 10 is launched from the canister C, the constraint on the main wings 120 is removed, so that the first coil spring S1, which has been compressed, extends and causes the first rod unit 140 to move rearward by the elastic force thereof, and the link connection portion 132 also moves rearward. Then, the main wings 120 may gradually deploy by the action of the link unit 130 and finally reach the first mode state (see FIGS. 4, 6, and 10). For the main wings 120 to be fully deployed and reach the first mode state, the first rod unit 140 may need to move sufficiently, and thus a designer should appropriately design the first coil spring S1 and the first rod unit 140 in consideration of this.

According to the first embodiment, the first coil spring S1 may be arranged to elastically install the first rod unit 140, but the disclosure is not limited thereto. That is, according to the disclosure, the first rod unit 140 only needs to be elastically installed in the first actuator 145, and there is no limitation on the specific means thereof. For example, the first rod unit 140 may be elastically installed using pneumatic pressure, or may also be elastically installed using various elastic materials such as rubber bands.

The first actuator 145 may be installed to be slidable within the fuselage 110. The movement of the first actuator 145 may be guided by the guide unit 112 described above.

The first elastic locking unit 150 may be installed in the first actuator 145 to restrict a movement of the first rod unit 140.

The first elastic locking unit 150 includes a first elastic support 151 and a first locking unit 152.

The first elastic support 151 may be formed of a coil spring, one end of which may be fixed to the first actuator 145 and the other end may be fixed to the first locking unit 152.

The first locking unit 152 includes a first inclined surface 152a and a first locking surface 152b.

When the first protrusion 141 of the first rod unit 140 moves rearward and a rear surface 141b comes into contact with the first inclined surface 152a, the first elastic support 151 may be compressed, and as a result, the first locking unit 152 may move in the direction of the first elastic support 151.

As the first protrusion 141 of the first rod unit 140 moves further rearward, the first elastic support 151 may extend such that a front surface 141a of the first protrusion 141 is caught by the first locking surface 152b, whereby a forward movement of the first rod unit 140 may be restricted (see FIG. 6), and the main wings 120 may be in the first mode state.

Meanwhile, the second rod unit 160 may be connected to the first actuator 145 and moves together with the first actuator 145.

The second rod unit 160 may be elastically installed in the second actuator 165, and a direction of elastic force acting on the second rod unit 160 may be opposite to that of the first rod unit 140.

One end of the second rod unit 160 is connected to the first actuator 145, and a second protrusion 161 is formed at the other end and is configured to be caught by a trigger unit 171 and a second elastic locking unit 180.

Since the second rod unit 160 is elastically installed in the second actuator 165, when the unmanned aerial vehicle 10 switches from the first mode to the second mode as the main wings 120 are retracted for a self-detonation attack, an elastic force acts on the second rod unit 160, and the link unit 130 rotates the main wings 120, so that the main wings 120 enter the second mode state. In this case, the transition to the second mode state is also assisted by drag acting on the unmanned aerial vehicle 10 during flight, and details related thereto will be described later.

A second coil spring S2 may be provided to elastically install the second rod unit 160. When the unmanned aerial vehicle 10 is stored in the canister C, or when the main wings 120 are in the fully deployed first mode state, the second coil spring S2 may be in a compressed state, as shown in FIG. 7 in a side-view.

When an increase in the flight speed of the unmanned aerial vehicle 10 is required, such as for the self-detonation attack, the main wings 120 may switch to the second mode, and the trigger control unit 200 may operate in that case. As shown in FIG. 8 in a side-view, when the trigger unit 171 of the trigger actuator 170 moves upward, the engagement of the second protrusion 161 may be released, and the previously compressed second coil spring S2 may extend, thereby causing the second rod unit 160 to move forward. As a result, the first actuator 145 connected to the second rod unit 160 also moves forward, followed by the movement of the link unit 130, thereby causing the main wings 120 to retract by a predetermined angle and to finally enter the second mode state (see FIGS. 3, 8, and 11). In addition, the retraction of the main wings 120 may be assisted not only by the elastic force of the second coil spring S2, but also by the drag acting on the main wings 120 while the unmanned aerial vehicle 10 is in flight.

Here, the sweep angle of the main wings 120 is related to a moving distance of the second rod unit 160. That is, when the moving distance of the second rod unit 160 is large, the sweep angle of the main wings 120 becomes large, and when the moving distance of the second rod unit 160 is small, the sweep angle of the main wings 120 becomes small. Therefore, a designer appropriately designs the second rod unit 160 to move by a predetermined distance. In particular, it is preferable to design the moving distance of the second rod unit 160 to be shorter than the distance of the first rod unit 140, which is stored in the canister C and moves until the main wings 120 transitions to the first mode state. If the moving distance of the second rod unit 160 becomes excessively long, the sweep angle of the main wings 120 also becomes excessively large, which may reduce lift and make it difficult for the unmanned aerial vehicle 10 to return in the event of mission cancellation, so appropriate design is required.

According to the first embodiment, the second coil spring S2 is provided to elastically install the second rod unit 160, but the disclosure is not limited thereto. That is, according to the disclosure, it is only required that the second rod unit 160 be elastically installed in the second actuator 165, and no limitation is imposed on the specific means for achieving this. For example, the second rod unit 160 may be elastically installed using pneumatic pressure, or using various elastic materials such as rubber bands.

In the first embodiment, the second rod unit 160 is elastically installed in the second actuator 165, but the disclosure is not limited to this configuration. That is, according to the disclosure, the second rod unit 160 may be installed in such a manner that no elastic force acts between the second rod unit 160 and the second actuator 165. The detailed configuration thereof will be described in a second embodiment.

The second actuator 165 may be installed to be fixed to the fuselage 110.

Meanwhile, the trigger actuator 170 includes the trigger unit 171 for releasing the locking of the second rod unit 160 and an actuator 172.

The trigger actuator 170 may be installed in the second actuator 165 or the fuselage 110.

An initial state of the trigger unit 171 is a state in which the second protrusion 161 of the second rod unit 160 is caught, as shown in FIG. 7. That is, in the initial state, a front surface 161a of the second protrusion 161 is caught by the trigger unit 171.

The actuator 172 controls a movement of the trigger unit 171 in response to a signal from the trigger control unit 200. The actuator 172 may be configured as a device capable of moving the trigger unit 171, and no particular limitation is imposed on its specific structure or operation. For example, the actuator 172 may employ a motor such as a servo motor or may employ a pneumatic or hydraulic actuator.

As described above, when attempting to change a state of the main wings 120 from the first mode to the second mode for the self-detonation attack, the trigger control unit 200 drives the actuator 172 to move the trigger unit 171 upward, as shown in FIG. 8 in side-view, thereby releasing a locking state of the second protrusion 161 and allowing the second rod unit 160 to move forward.

Meanwhile, the second elastic locking unit 180 restricts a movement of the second rod unit 160 and may be installed in the second actuator 165.

In the present embodiment, the second elastic locking unit 180 is installed in the second actuator 165, but the disclosure is not limited thereto. That is, according to the disclosure, the second elastic locking unit 180 may also be installed in the fuselage 110.

The second elastic locking unit 180 includes a second elastic support 181 and a second locking unit 182.

The second elastic support 181 may be configured as a coil spring, one end of which is fixed to the second actuator 165 and the other end is fixed to the second locking unit 182.

The second locking unit 182 includes a second inclined surface 182a and a second locking surface 182b.

When the second protrusion 161 of the second rod unit 160 moves forward and the front surface 161a thereof comes into contact with the second inclined surface 182a, the second elastic support 181 is compressed and the second locking unit 182 moves in a direction of the second elastic support 181.

As the second protrusion 161 of the second rod unit 160 further moves forward, the second elastic support 181 extends, and a rear surface 161b of the second protrusion 161 becomes caught by the second locking surface 182b, so that the second rod unit 160 is restricted from moving rearward (see FIG. 8), and the main wings 120 are in the second mode.

As described above, a direction in which the second elastic locking unit 180 restricts the movement of the second rod unit 160 is opposite to a direction in which the first elastic locking unit 150 restricts the movement of the first rod unit 140.

Meanwhile, the trigger control unit 200 controls the trigger actuator 170.

The trigger control unit 200 receives a command from a user or the main control unit 400 and controls the trigger actuator 170 to move the trigger unit 171 when the retraction of the main wings 120 is required.

The trigger control unit 200 may include memory such as read-only memory (ROM) and random access memory (RAM) for storing data, hardware such as a circuit board and integrated circuit chips for processing data, and software and firmware, and is configured to operate under the control of a user or a control algorithm.

The thrust-generating unit 300 provides thrust for moving the fuselage 110 and includes a power generation device 310 and a propeller 320.

The power generation device 310 may include a motor, an engine, and various reducers.

The main control unit 400 is a device configured to control overall operation of the unmanned aerial vehicle 10. The main control unit 400 may include memory such as the ROM and the RAM for storing data, hardware such as a circuit board and integrated circuit chips for processing data, and software and firmware, and may be operated under the control of a user or a control algorithm.

In the present embodiment, the main control unit 400 and the trigger control unit 200 are provided separately, but the disclosure is not limited thereto. That is, according to the disclosure, the software and hardware of the trigger control unit 200 may be integrated into the main control unit 400.

The communication unit 500 is a device configured to perform communication between a user and the unmanned aerial vehicle 10. A user may transmit commands to the main control unit 400 of the unmanned aerial vehicle 10 via the communication unit 500, and may view received images obtained by the camera unit 600.

The communication unit 500 may include a commercial wireless communication device.

The camera unit 600 is configured to capture a surrounding area while the unmanned aerial vehicle 10 performs reconnaissance. The camera unit 600 is configured to control capturing directions in response to commands from the main control unit 400, and may include a commercial camera device.

The horizontal tail wings 700 and the vertical tail wing 800 may elastically be mounted at a rear end portion of the fuselage 110.

The horizontal tail wings 700 and the vertical tail wing 800 may elastically be installed by the hinge-spring structures S3, so that when stored in the canister C, the horizontal tail wings 700 overlap the fuselage 110 and the vertical tail wing 800 is housed in the storage portion 111 of the fuselage 110. When the unmanned aerial vehicle 10 is launched from the canister C, the horizontal tail wings 700 and the vertical tail wing 800 are deployed by the elastic force of the torsion spring, as shown in FIGS. 1 and 10.

Hereinafter, with reference to FIGS. 1 to 11, operations of the system 100 for controlling the wing sweep according to the first embodiment are described in detail.

First, when the unmanned aerial vehicle 10 is stored in the canister C, the main wings 120 and the horizontal tail wings 700 overlap the fuselage 110, and the vertical tail wing 800 is accommodated in the fuselage 110, as shown in FIG. 9 in a top-view. In that case, the first coil spring S1 is in the compressed state as shown in FIG. 5, and the torsion springs included in the hinge-spring structures S3 of the horizontal tail wings 700 and the vertical tail wing 800 are also storing elastic energy. The canister C inhibits the action of the main wings 120, the horizontal tail wings 700, and the vertical tail wing 800 from deploying.

When a user launches the unmanned aerial vehicle 10 from the canister C, the thrust-generating unit 300 of the unmanned aerial vehicle 10 is actuated, and the inhibition by the canister C is removed, such that the main wings 120, the horizontal tail wings 700, and the vertical tail wing 800 are deployed by respective actions of the first coil spring S1 and the torsion springs of the hinge-spring structures S3, as shown in FIG. 10 in a top-view. Specifically, during the process of deploying the main wings 120, when the unmanned aerial vehicle 10 is launched from the canister C, the inhibition by the canister C is removed, and the previously compressed first coil spring S1 extends, causing the first rod unit 140 to move rearward by its elastic force, gradually deploying the main wings 120 through the operation of the link unit 130.

Once the first rod unit 140 is moved rearward by the elastic force, the first protrusion 141 is caught by the first locking unit 152, thereby restricting the forward movement of the first rod unit 140. Advantageously, this prevents the main wings 120 from folding due to drag during reconnaissance flight, and the main wings 120 enter the first mode state (see FIGS. 4, 6, and 10).

The unmanned aerial vehicle 10 performs reconnaissance flight using thrust generated by the thrust-generating unit 300 and, when a target P is identified and a point for performing a self-detonation attack is reached, it becomes necessary to increase flight speed to ensure a successful attack. In that case, a user or the main control unit 400 causes the main wings 120 to be retracted by a predetermined angle through control, thereby changing the state of the main wings 120 from the first mode to the second mode. That is, the sweep angle of the main wings 120 changes.

Specifically, under a command from a user or the main control unit 400, the trigger control unit 200 controls the trigger actuator 170 to move the second rod unit 160 forward. That is, as shown in FIG. 8, when the trigger unit 171 is moved upward to release the locking state of the second protrusion 161, the previously compressed second coil spring S2 extends and moves the second rod unit 160 forward by the elastic force thereof. When the second rod unit 160 moves further forward, the second protrusion 161 is caught by the second locking unit 182, so that a backward movement thereof is restricted. This may prevent the main wings 120 from returning to the first mode during flight for a self-detonation attack.

When the second rod unit 160 moves forward, the first actuator 145 connected thereto also moves forward, and in turn, the link unit 130 is moved so that the main wings 120 are retracted by a predetermined angle and enter the second mode state (see FIGS. 3, 8, and 11).

When the main wings 120 enter the second mode state, the sweep angle is increased to allow an increase in flight speed of the unmanned aerial vehicle 10, thereby increasing the success rate of a self-detonation attack toward the target P.

As described above, in the system 100 and the unmanned aerial vehicle 10 according to the first embodiment, it is unnecessary to provide a separate actuator or gearbox for the retraction of the main wings 120, thereby reducing manufacturing cost and weight and facilitating installation and maintenance due to the simple structure.

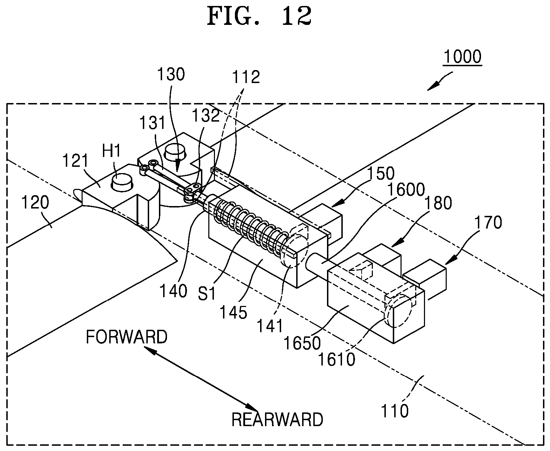

Hereinafter, with reference to FIGS. 12 to 14, a system 1000 for controlling a wing sweep angle, according to a second embodiment will be described, with focus placed on differences from the system 100 according to the first embodiment.

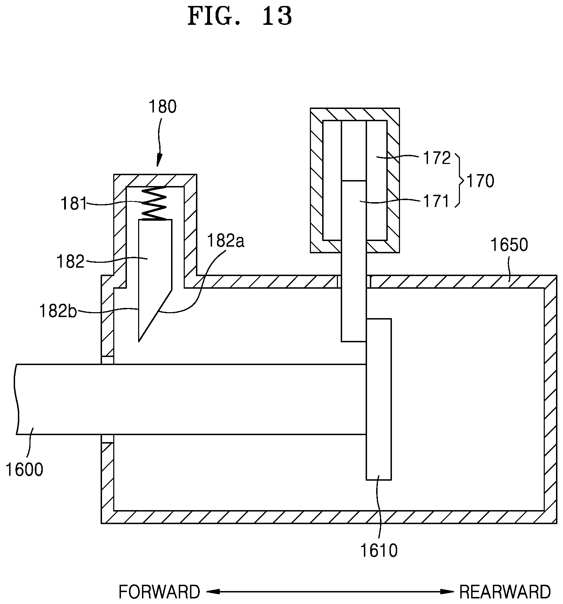

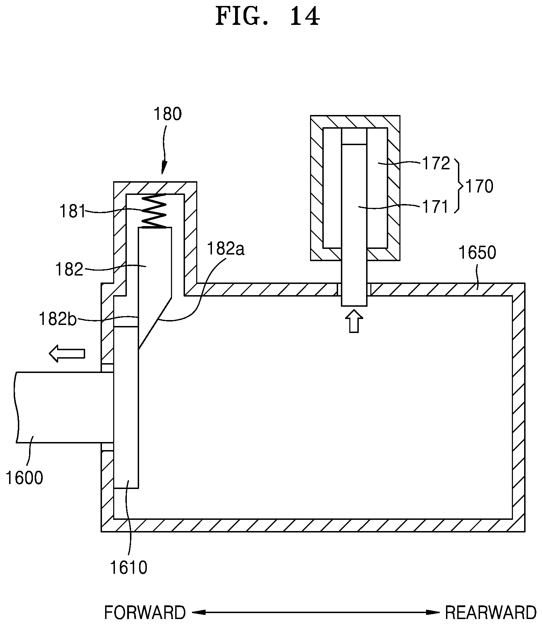

FIG. 12 is a schematic diagram illustrating components of a control system of wing sweep angle when a state of the main wings of an unmanned aerial vehicle according to a second embodiment is in a first mode. Also, FIG. 13 is a schematic side-view diagram illustrating a state of a second rod unit, a second actuator, a trigger actuator, and a second elastic locking unit when the unmanned aerial vehicle according to the second embodiment is stored in a canister or a state of the main wings of the unmanned aerial vehicle is in a first mode, and FIG. 14 is a schematic side-view diagram illustrating a state of the second rod, the second actuator, the trigger actuator, and the second elastic locking unit, when a state of the main wings of the unmanned aerial vehicle according to the second embodiment is in a second mode.

The difference between the system 1000 according to the second embodiment and the system 100 according to the first embodiment is that a second rod unit 1600 of the system 1000 is not elastically installed in a second actuator 1650. Accordingly, the system 1000 according to the second embodiment does not include a configuration corresponding to the second coil spring S2 of the first embodiment. Because the remaining configurations and operations may be employed in the same manner as those in the first embodiment described above, the reference numerals used in the drawings are also the same as those in the first embodiment, except for the second rod unit 1600 and the second actuator 1650.

As described above, the system 1000 according to the second embodiment does not include the second coil spring S2 as in the first embodiment, while the remaining parts are identical. Therefore, descriptions of the state in which the second coil spring S2 is not involved, that is, the state in which the unmanned aerial vehicle 10 is stored in the canister C and the state of the unmanned aerial vehicle 10 is in the first mode, are the same as those described in the first embodiment, and thus detailed descriptions thereof will be omitted here.

Compared to the system 100 of the first embodiment, the system 1000 of the second embodiment differs in the manner in which the state of the main wings 120 is switched from the first mode to the second mode. This is because the second embodiment does not include the second coil spring S2, so the mode switching from the first mode to the second mode is performed solely by the drag acting on the main wings 120.

That is, when the unmanned aerial vehicle 10 performs reconnaissance flight, drag acts on the main wings 120, and such drag tends to retract each of the main wings 120 rearward. Such drag generates torque that tends to rotate the main wings 120 about respective ones of the first hinge pins H1.

Therefore, when a release operation of the trigger actuator 170 occurs during reconnaissance flight, the link unit 130 acts due to such drag, thereby causing the first actuator 145 and the second rod unit 1600 to move forward. Then, as the second rod unit 1600 moves further forward, a second protrusion 1610 is caught by the second locking unit 182, thereby fixing the second mode state (see FIG. 14).

In the case of the second embodiment, because switching to the second mode is achieved only by drag acting on the main wings 120 during reconnaissance flight, the shape of the main wings 120 and the hinge structure by which the main wings 120 are mounted on the fuselage 110 should also be appropriately designed to facilitate rotation of the main wings 120 during the transition to the second mode.

As described above, in the system 1000 and the unmanned aerial vehicle 10 according to the second embodiment, the second coil spring S2 is unnecessary as well, so that the main wings 120 may be retracted with a simpler structure than in the system 100 of the first embodiment. Accordingly and advantageously, in the system 1000 of the second embodiment, no separate actuator or gearbox is required for the retraction of the main wings 120, thereby reducing manufacturing costs and weight, and enabling easier installation and maintenance due to the simple structure.

In the above-described first and second embodiments, the reason for switching the state of the main wings 120 from the first mode to the second mode has been described mainly with respect to self-detonation attack, but the disclosure is not limited thereto. That is, because the retraction of the main wings 120 generally increases flight speed, the disclosure may be applied without limitation to any case where it is necessary to increase flight speed, even if it is not the self-detonation attack.

The systems 100 and 1000 according to the first and second embodiments described above are applied to the unmanned aerial vehicle, but the disclosure is not limited thereto. That is, systems 100 and 1000 according to the disclosure may also be applied to manned aircraft.

A system for controlling a wing sweep angle and an unmanned aerial vehicle according to aspects of the disclosure may effectively adjust a wing sweep angle with a simple structure, thereby reducing manufacturing cost and weight, and facilitating maintenance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A system (100, 1000) for controlling a wing sweep angle, the system (100, 1000) comprising: main wings (120) rotatably mounted on a fuselage (110); and
a control unit configured to control a sweep angle of the main wings (120),
wherein the control unit is further configured to deploy or retract the main wings (120) and fix the main wings (120) at at least two sweep angles.

2. The system (100, 1000) of claim 1, wherein the main wings (120) are mounted on the fuselage (110) by hinge structures.

3. The system (100, 1000) of claim 1 or 2, wherein the control unit comprises:
a link unit (130) connected to the main wings (120);
a first rod unit (140) connected to the link unit (130);
a first actuator (145) in which the first rod unit (140) is elastically installed;
a first elastic locking unit (150) installed in the first actuator (145) and configured to restrict a movement of the first rod unit (140);
a second rod unit (160, 1600) connected to the first actuator (145) and moving together with the first actuator (145);
a second actuator (165, 1650) in which the second rod unit (160, 1600) is installed and which is fixedly installed on the fuselage (110);
a second elastic locking unit (180) configured to restrict a movement of the second rod unit (160, 1600); and
a trigger actuator (170) including a trigger unit (171) configured to release the restriction of the second rod unit (160, 1600).

4. The system (100, 1000) of claim 3, wherein the first rod unit (140) is elastically installed in the first actuator (145) by a first coil spring (S1).

5. The system (100, 1000) of claim 3 or 4, wherein a direction in which the first elastic locking unit (150) restricts the movement of the first rod unit (140) is opposite to a direction in which the second elastic locking unit (180) restricts the movement of the second rod unit (160, 1600).

6. The system (100, 1000) of any one of claims 3 to 5, wherein the second rod unit (160, 1600) is elastically installed in the second actuator (165, 1650).

7. The system (100, 1000) of any one of claims 3 to 6, wherein the second rod unit (160, 1600) is elastically installed in the second actuator (165, 1650) by a second coil spring (S2).

8. The system (100, 1000) of any one of claims 3 to 7, wherein a direction of an elastic force acting on the second rod unit (160, 1600) is opposite to a direction of an elastic force acting on the first rod unit (140).

9. The system (100, 1000) of any one of claims 3 to 8, wherein the first elastic locking unit (150) includes a first locking unit (152) with at least an inclined surface.

10. The system (100, 1000) of any one of claims 3 to 9, wherein the second elastic locking unit (180) includes a second locking unit (182) with at least an inclined surface.

11. The system (100, 1000) of any one of claims 3 to 10, wherein, when the trigger actuator (170) is operated and the trigger unit (171) releases the restriction of the second rod unit (160, 1600), the second rod unit (160, 1600) moves forward and is caught by the second elastic locking unit (180), thereby restricting the movement of the second rod unit (160, 1600).

12. An unmanned aerial vehicle (10) comprising:
a fuselage (110);
main wings (120) rotatably mounted on the fuselage (110); and
a control unit configured to control a sweep angle of the main wings (120),
wherein the control unit is further configured to deploy or retract the main wings (120), and fix the main wings (120) at at least two sweep angles.

13. The unmanned aerial vehicle (10) of claim 12, wherein the control unit comprises:
a link unit (130) connected to the main wings (120);
a first rod unit (140) connected to the link unit (130);
a first actuator (145) in which the first rod unit (140) is elastically installed;
a first elastic locking unit (150) installed in the first actuator (145) and configured to restrict a movement of the first rod unit (140);
a second rod unit (160, 1600) connected to the first actuator (145) and moving together with the first actuator (145);
a second actuator (165, 1650) in which the second rod unit (160, 1600) is installed and which is fixedly installed on the fuselage (110);
a second elastic locking unit (180) configured to restrict a movement of the second rod unit (160, 1600); and
a trigger actuator (170) including a trigger unit (171) configured to release the restriction of the second rod unit (160, 1600).

14. The unmanned aerial vehicle (10) of claim 13, wherein the second rod unit (160, 1600) is elastically installed in the second actuator (165, 1650).

15. The unmanned aerial vehicle (10) of claim 13 or 14, further comprising:
a trigger control unit (200) configured to control the trigger actuator (170); and
a thrust-generating unit (300) configured to move the fuselage (110).

## Amended claims

### Amended claims in accordance with Rule 137(2) EPC.

1. A system (100, 1000) for controlling a wing sweep angle, the system (100, 1000) comprising:
main wings (120) rotatably mounted on a fuselage (110); and
a control unit configured to control a sweep angle of the main wings (120),
wherein the control unit is further configured to deploy or retract the main wings (120) and fix the main wings (120) at at least two sweep angles, **characterized in that** the control unit comprises:
a link unit (130) connected to the main wings (120);
a first rod unit (140) connected to the link unit (130);
a first actuator (145) in which the first rod unit (140) is elastically installed;
a first elastic locking unit (150) installed in the first actuator (145) and configured to restrict a movement of the first rod unit (140);
a second rod unit (160, 1600) connected to the first actuator (145) and moving together with the first actuator (145);
a second actuator (165, 1650) in which the second rod unit (160, 1600) is installed and which is fixedly installed on the fuselage (110);
a second elastic locking unit (180) configured to restrict a movement of the second rod unit (160, 1600); and
a trigger actuator (170) including a trigger unit (171) configured to release the restriction of the second rod unit (160, 1600).

2. The system (100, 1000) of claim 1, wherein the main wings (120) are mounted on the fuselage (110) by hinge structures.

3. The system (100, 1000) of claim 1, wherein the first rod unit (140) is elastically installed in the first actuator (145) by a first coil spring (S1).

4. The system (100, 1000) of claim 1 or 3, wherein a direction in which the first elastic locking unit (150) restricts the movement of the first rod unit (140) is opposite to a direction in which the second elastic locking unit (180) restricts the movement of the second rod unit (160, 1600).

5. The system (100, 1000) of any one of claims 1 to 4, wherein the second rod unit (160, 1600) is elastically installed in the second actuator (165, 1650).

6. The system (100, 1000) of any one of claims 1 to 5, wherein the second rod unit (160, 1600) is elastically installed in the second actuator (165, 1650) by a second coil spring (S2).

7. The system (100, 1000) of any one of claims 1 to 6, wherein a direction of an elastic force acting on the second rod unit (160, 1600) is opposite to a direction of an elastic force acting on the first rod unit (140).

8. The system (100, 1000) of any one of claims 1 to 7, wherein the first elastic locking unit (150) includes a first locking unit (152) with at least an inclined surface.

9. The system (100, 1000) of any one of claims 1 to 8, wherein the second elastic locking unit (180) includes a second locking unit (182) with at least an inclined surface.

10. The system (100, 1000) of any one of claims 1 to 9, wherein, when the trigger actuator (170) is operated and the trigger unit (171) releases the restriction of the second rod unit (160, 1600), the second rod unit (160, 1600) moves forward and is caught by the second elastic locking unit (180), thereby restricting the movement of the second rod unit (160, 1600).

11. An unmanned aerial vehicle (10) comprising:
a fuselage (110);
main wings (120) rotatably mounted on the fuselage (110); and
a control unit according to claims 1 to 10 configured to control a sweep angle of the main wings (120),
wherein the control unit is further configured to deploy or retract the main wings (120), and fix the main wings (120) at at least two sweep angles.

12. The unmanned aerial vehicle (10) of claim 11, wherein the second rod unit (160, 1600) is elastically installed in the second actuator (165, 1650).

13. The unmanned aerial vehicle (10) of claim 11 or 12, further comprising:
a trigger control unit (200) configured to control the trigger actuator (170); and
a thrust-generating unit (300) configured to move the fuselage (110).
